# EUROPÄISCHE PATENTANMELDUNG

(11) **EP 4 663 616 A1**
(43) Veröffentlichungstag der Anmeldung: **17.12.2025**
(21) Anmeldenummer: 25181628.6
(22) Anmeldetag: 10.06.2025
(51) Int. Cl.: C04B 7/14, C04B 20/02

(54) **SCHLACKEERZEUGUNGSPROZESS ALS KOHLENDIOXID-SENKE**

(30) Priorität: 13.06.2024 DE 102024116675; 13.06.2024 LU 103313
(71) Anmelder: ThyssenKrupp MillServices & Systems GmbH, 46149 Oberhausen (DE); thyssenkrupp AG, 45143 Essen (DE)
(72) Erfinder: DOHLEN, Michael, 47058 Duisburg (DE)
(74) Vertreter: thyssenkrupp Intellectual Property GmbH

(57) **Zusammenfassung**

Die vorliegende Erfindung betrifft ein Verfahren zur Erzeugung von Eisen und/oder Stahl, wobei bei der Erzeugung von Eisen und/oder Stahl eine Schlacke als Nebenprodukt entsteht, wobei bei der Erzeugung von Eisen und/oder Stahl Kohlendioxid als Nebenprodukt anfällt, wobei das Verfahren zur Bindung des Kohlendioxids aus der Erzeugung von Eisen und/oder Stahl an die Schlacke aus der Erzeugung von Eisen und/oder Stahl dient, wobei das Verfahren die folgenden Schritte aufweist:
a) Verbringen der schmelzflüssigen Schlacke in ein Schlackenbeet,
b) Abkühlen einschließlich Erstarren der Schlacke im Schlackenbeet,
c) Restkühlung der Schlacke mit Wasser und Brechen der Schlacke aus dem Schlackenbeet,
d) Zerkleinerung der in Schritt c) erhaltenen feuchten Schlacke,
e) Carbonatisieren der Schlacke während und/oder nach Schritt d) mit der in Schritt c) erhaltenen Feuchte mit dem Kohlendioxid aus der Erzeugung von Eisen und/oder Stahl.

## Beschreibung

Die Erfindung betrifft ein Verfahren, wodurch bei der Erzeugung von Eisenhüttenschlacke eine dauerhafte Bindung von Kohlendioxid in der Schlacke, bevorzugt eben am Ort der Erzeugung der Schlacke und damit in dem Prozess der Schlackenerzeugung, erfolgt, sodass die Nebenprodukte Schlacke und Kohlendioxid aus der Eisen- und/oder Stahlherstellung gemeinsam gebunden werden. Die Erzeugung von Eisenhüttenschlacke umfasst dabei erfindungsgemäß eben nicht nur die Entstehung der Schlacke im metallurgischen Prozess, sondern auch das Abkühlen und Aufarbeiten bis zu dem Punkt, an dem die Schlacke entweder als Produkt verkauft wird oder zur Deponierung transportiert wird. Durch die Integration der Carbonatisierung in den Herstellungsprozess der Schlacke wird die Carbonatisierung deutlich effizienter gegenüber einem nachgelagerten Prozess.

In steigendem Maße wird es notwendig, natürliche Ressourcen zu schonen und auf recycelte Materialien, industrielle Nebenprodukte und andere Sekundärrohstoffe zurückzugreifen. Ebenso sind die Emissionen von Kohlendioxid (CO₂) als Ursache für die globale Erwärmung kritisch. Daher wird zunehmend auf die Abtrennung von Kohlendioxid aus dem Abgas industrieller Anlagen und dessen dauerhafte Speicherung (Carbon Capture and Storage CCS) oder Nutzung (Carbon Capture and Utilization CCU) gesetzt. Eine mögliche Form ist die Einbringung als verflüssigtes Kohlendioxid im Untergrund an Land oder im Meeresuntergrund. Dieses Verfahren ist jedoch nicht unumstritten, da ein dauerhafter Verbleib von klimaschädlichem CO₂ nicht zwangsläufig garantiert ist und bei einem Entweichen der Treibhauseffekt wieder verstärkt werden würde, zumal für die Abtrennung und Lagerung weitere Energie benötigt wird und damit potenziell zusätzliches Kohlendioxid produziert wird.

Eine der Kohlendioxid-intensiven Industrien ist die Zementindustrie. Die Herstellung eines Megagramms Zement ist in Deutschland mit CO₂-Emissionen von rund 600 kg verbunden. Zum einen wird für die Produktion von Zementklinker, einem Vorprodukt des Zements, viel Energie benötigt, was bei den herkömmlichen fossilen Brennstoffen zu einer Kohlendioxid-Emission führt. Zum anderen wird aus dem Rohmaterial, beispielsweise Kalkstein, bei der Kalzinierung Kohlendioxid rohstoffbedingt freigesetzt.

Die Stahlindustrie spielt eine entscheidende Rolle in der globalen Wirtschaft und ist daher auch entscheidend bei der Bewältigung der Herausforderungen des Klimawandels. Durch die Implementierung innovativer Technologien und Verfahren kann sie dazu beitragen, den CO₂-Ausstoß erheblich zu reduzieren, beispielsweise durch den Einsatz von grünem Wasserstoff anstelle von fossilen Energieträgern.

Auf der anderen Seite entstehen bei der Eisenverhüttung und -verarbeitung Schlacken, die beispielsweise (Erd-)Alkalioxide enthalten und somit die Fähigkeit aufweisen Kohlendioxid langfristig und stabil zu binden. Ähnlich wie Altbeton sollte somit auch Schlacke geeignet sein, Kohlendioxid mineralogisch zu binden. Jährlich entstehen allein in Deutschland rund 4,7 Mio. Tonnen Stahlwerksschlacken, wovon etwa 67 % auf das Linz-Donawitz-Verfahren (LD-Verfahren) entfallen. Die Schlacken werden vor allem für den Verkehrswege- und Erdbau sowie als Kalkdüngemittel in der Landwirtschaft verwendet. Einige Schlacken haben derzeit keine Verwendung und werden deponiert.

Aus der WO 2020 / 058 247 A1 ist ein Verfahren und eine Anlage zum Aufbereiten von Material, das Zementstein enthält, bekannt.

Aus der EP 3 656 750 A2 ist die Verwendung von Kohlendioxid aus und für Zement bekannt.

Aus der nachveröffentlichten DE 10 2022 132 073 ist ein Verfahren und eine Vorrichtung zur effizienten Reduktion von Kohlendioxidemissionen bekannt.

Aus der nachveröffentlichten DE 10 2023 113 943 ist ein Verfahren und eine Vorrichtung zur effizienten Reduktion von Kohlendioxidemissionen bekannt.

Aus der nachveröffentlichten DE 10 2023 123 525 ist die Aktivierung von Altbeton mittels eines Pflugscharmischers und einer Mühle bekannt.

Aus der EP 3 656 750 A2 ist die Verwendung von Kohlendioxid aus und für die Zementproduktion bekannt.

Aus der EP 4 279 614 A1 ist die Abwärmenutzung bei der Abkühlung von Schlacken aus der Eisen- und Stahlherstellung bekannt.

Aus der KURUSTA TAMAS ET AL: "Carbon-dioxide sequestration by mechanical activation of Linz-Donawitz steel slag; the effect of water on C02 capture", FUEL, IPC SIENCE AND TECHNOLOGY PRESS, GUILDFORD, GB, Bd. 352, 21. Juni 2023 (2023-06-21), XP087388210, ISSN: 0016-2361, DOI: 10.1016/J.FUEL.2023.128951 [gefunden am 2023-06-21], ist die Sequestration durch mechanisch aktivierte LD-Schlacke bekannt.

Aufgabe der Erfindung ist es, ein effizientes Verfahren zur Carbonatisierung von Schlacke bereitzustellen, um so eine Kohlendioxid-Senke mit nachhaltiger, langfristiger Bindungswirkung bereitzustellen, welches den Aufwand für die Sequestration minimiert und den Effekt dafür maximiert.

Gelöst wird diese Aufgabe durch das Verfahren mit den in Anspruch 1 angegebenen Merkmalen. Vorteilhafte Weiterbildungen ergeben sich aus den Unteransprüchen und der nachfolgenden Beschreibung.

Das erfindungsgemäße Verfahren dient der Erzeugung von Eisen und/oder Stahl. Bei der Erzeugung von Eisen und/oder Stahl entsteht zum einen eine Schlacke als Nebenprodukt und zum anderen fällt Kohlendioxid als Nebenprodukt an. Das Verfahren dient zur chemischen Bindung des Kohlendioxids an beziehungsweise in Schlacke. Hierbei wird ausgenutzt, dass dieses besonders einfach ist, wenn dieses unmittelbar in den Herstellungsprozess der Schlacke integriert ist. Dadurch werden zusätzliche Aufwände vermieden, der Gesamtenergiebedarf reduziert und so unnötige Energieaufwände vermieden. Das Verfahren weist die folgenden Schritte auf:
a) Verbringen der schmelzflüssigen Schlacke in ein Schlackenbeet,
b) Abkühlen einschließlich Erstarren der Schlacke im Schlackenbeet,
c) Restkühlung der Schlacke mit Wasser und Brechen der Schlacke aus dem Schlackenbeet,
d) Zerkleinerung der in Schritt c) erhaltenen feuchten Schlacke,
e) Carbonatisieren der Schlacke während und/oder nach Schritt d) mit der in Schritt c) erhaltenen Feuchte mit dem Kohlendioxid aus der Erzeugung von Eisen und/oder Stahl.

Die Schritte a) bis c) entsprechen dem heutigen Prozess und auch heute wird die Schlacke in einem Zerkleinerungsprozess analog Schritt d) zerkleinert. Insoweit erfolgt eben keine Änderung des bisherigen Prozesses, vielmehr werden ohnehin die gleichen Schritte wie bisher durchgeführt, sodass kein zusätzlicher Energiebedarf entsteht.

Die Carbonatisierung in Schritt e) erfolgt dadurch, dass ein kohlendioxidhaltiger Gasstrom über die Schlacke geführt oder besser innig mit dieser vermischt wird. Dazu ist in der Schlacke eine Feuchte, also ein Anteil an flüchtigem, nicht als Kristallwasser gebundenem, Wasser extrem vorteilhaft, um eine hohe Reaktionsgeschwindigkeit zu ermöglichen. Die Carbonatisierung kann auch feucht, also bei wesentlich höherem Wassergehalt (Schlamm) erfolgen, jedoch kommt hier zusätzlich die Lösung und Diffusion des Kohlendioxids im Wasser hinzu, sodass dieses die Reaktion ebenfalls verlangsamen kann, dafür lassen sich leicht lange Reaktionszeiten realisieren. Erfindungswesentlich ist, dass der für die Carbonatisierung notwendige Feuchtegehalt in Schritt c) eingestellt wird. Das hat gegenüber allen bekannten Verfahren, in denen eine Trennung von Schlackenherstellung und Verwendung der Schlacke zur Bindung von beispielsweise Kohlendioxid verwendet wird, eine Reihe von Vorteilen. Die Schlacke wird in Schritt c) von einer erhöhten Temperatur, beispielsweise 150 °C abgekühlt, indem Wasser zugeführt wird. Dadurch kommt es zu einer Mischung aus mechanischem Aufbrechen durch Verdampfen des Wassers zusammen mit der nachgelagerten Feuchtigkeitsaufnahme in die Schlacke. Dieses führt dazu, dass die Schlacke, die dann unmittelbar mit dieser Feuchte weiter verwendet wird, für das Kohlendioxid besser zugänglich ist und damit schneller oder vollständiger carbonatisiert, als eine Schlacke, die nach dem Schritt d) erst gelagert wird und damit wieder austrocknet, beziehungsweise wodurch sich freies Wasser durch Bindung als Kristallwasser eben nicht mehr für die Carbonatisierung in effizienter Weise zur Verfügung steht.

Kern der Erfindung ist somit, dass die zwingend im Prozess der Schlackenerzeugung erreichte Erstbefeuchtung beim Herausbrechen der von ungefähr 1500 °C abgekühlten und erstarrten Schlacke aus dem Schlackenbeet genutzt wird, um unmittelbar eine Anbindung an diese erstbefeuchtete Schlacke zu erzielen. Dadurch trocknet die Schlacke nicht erst wieder aus, sodass kein großer Anteil der Feuchte als Kristallwasser bereits fest und dauerhaft gebunden und so dem Carbonatisierungsprozess entzogen wird.

In einer weiteren Ausführungsform der Erfindung erfolgt das Zerkleinern in Schritt c) zum Beispiel mit einer Vertikalmühle, auch Walzenschüsselmühle genannt, oder einer Kugelmühle. Weitere Alternativen wären Brecher wie Backenbrecher oder Kegelbrecher. Hiermit sind Feinheiten erreichbar, die für eine ausreichende Aufnahme von Kohlendioxid eine ausreichende Zerkleinerung bewirken, um die Aufnahme von Kohlendioxid auch in einer endlichen Zeit, durchführen zu können. Eine zu starke Vermahlung, beispielsweise mit Hochenergiemühlen, verschafft hingegen nur eine vergleichsweise geringfüge Erhöhung der Kohlendioxidaufnahme, steigert aber den Energiebedarf für den Prozess. Des Weiteren weisen Vertikalmühlen und Kugelmühlen üblicherweise ein Gehäuse auf, sodass diese direkt mit einem Kohlendioxid-haltigem Gasstrom durchströmt werden können. Damit ist es gerade in diesen Mühlentypen möglich, zum einen die notwendige Feinheit zu erreichen, ohne zu fein zu werden und gleichzeitig die Möglichkeit zu haben, bereits die Carbonatisierung e) in Schritt durchzuführen. Derartige Hochenergiemühlen wären aber für eine mechano-chemische Aktivierung notwendig. Dieses erzeugt zwar einen Stoff, der als Zementersatzstoff verwendet werden kann und damit beispielsweise in Beton dauerhaft eingebunden werden kann, der Energiebedarf dafür ist jedoch wesentlich höher. Außerdem ist der Bedarf für solche Materialien deutlich geringer als die im Eisen- und Stahlherstellungsprozess entstehenden Mengen an Schlacke und Kohlendioxid. Eine einfache, vergleichsweise grobe Zerkleinerung ist daher für den erstrebten Anwendungszweck vorteilhaft.

In einer weiteren Ausführungsform der Erfindung werden Schritt d) und e) wenigstens teilweise gleichzeitig durchgeführt, wobei durch die Vorrichtung zur Zerkleinerung Kohlendioxid-haltiges Gas geleitet wird. Wenigstens teilweise bedeutet in diesem Zusammenhang, dass nach dem Schritt d) die Carbonatisierung in Schritt e) beispielsweise in einem anschließenden Carbonatisierungsreaktor fortgesetzt werden kann, sich also der Schritt e) über das Ende von Schritt d) erstrecken kann. Dieses ist besonders bevorzugt, wenn der Kohlendioxid-Gehalt des zur Carbonatisierung verwendeten Gasstromes gering ist, insbesondere unterhalb von 10 Vol.-%, insbesondere unter 1 Vol.-% liegt, wie dieses zum Beispiel im Falle von Luft der Fall ist (Direct Air Capture), also die Bindung von Kohlendioxid aus der Atmosphäre zur Reduktion der Kohlendioxidkonzentration in der Atmosphäre und eben nicht nur die Vermeidung neuer Emissionen. Einer der Vorteile des erfindungsgemäßen Verfahrens ist, dass neben der Einstellung der richtigen Feuchte auch üblicherweise noch eine Restwärme in der befeuchteten Schlacke vorhanden ist, sodass der Carbonatisierungsprozess auch bereits in der Zerkleinerung effizient ablaufen kann. Ebenso führt die Befeuchtung der Schlacke zu einer Wärme durch die Hydratisierung der hochgeglühten Schlacke.

In einer weiteren Ausführungsform der Erfindung wird die Carbonatisierung in Schritt e) wenigstens teilweise in einem Carbonatisierungsreaktor anschließend an Schritt d) durchgeführt. Wie bereits ausgeführt heißt in diesem Zusammengang wenigstens teilweise, dass die Carbonatisierung schon während Schritt d), beispielsweise in der Mühle oder einem anderen Brechaggregat, beginnen kann und zur Verlängerung der Reaktionszeit dann in einem Carbonatisierungsreaktor fortgesetzt wird.

Der Carbonatisierungsreaktor kann beispielsweise in Form eines Flugstromreaktors mit Abscheidezyklon ausgeführt sein. Dieses ist bevorzugt, wenn die Zerkleinerung in Schritt d) in einer Vertikalmühle erfolgt, da dort das Mahlgut bereits in einem Gasstrom ausgetragen wird. Hierbei kann zwischen der Vertikalmühle und dem Flugstromreaktor ein Sichter angeordnet sein, um zu grobes Material zurück zur Mahlung zu führen.

Der Carbonatisierungsreaktor kann beispielsweise in Form eines Mischers, beispielsweise eines Pflugscharmischers ausgeführt sein. Vorteil ist, dass hier ein mechanisches Wirbelbett eine sehr gute Durchmischung von Feststoff und Gas ermöglicht, der geringere Gasstrom aber eine zu starke Austrocknung der Schlacke verhindert, was wiederum die Carbonatisierung verschlechtern würde.

Der Carbonatisierungsreaktor kann beispielsweise in Form eines Schachtofens, besonders bevorzugt eines Doppelschachtofen, ausgeführt sein. Die Schüttung in einem Schachtofen erlaubt eine sehr gute Kontaktzeit und eine kontinuierliche oder semikontinuierliche Erneuerung des Feststoffbettes aus Schlacke durch Aufgabe von oben und Entnahme von unten.

Diese Kombination ermöglicht eine zukunftssichere Umsetzung dieses Verfahrens. Während heute die Eisen- und Stahlproduktion nach wie vor auf Kohle (Koks) basiert, also große Mengen als Abgas mit einer hohen Konzentration von Kohlendioxid erzeugt, wird in Zukunft beispielsweise die Direktreduktion oder die Reduktion mit Wasserstoff zunehmend an Bedeutung gewinnen. Damit werden sich in Zukunft (hoffentlich) die kohlendioxidhaltigen Abgasströme reduzieren. Somit kann heute das Verfahren so durchgeführt werden, dass Schritt d) und Schritt e) gleichzeitig durchgeführt werden, indem ein Abgas mit einer hohen Kohlendioxidkonzentration aus dem Hüttenprozess, welcher beispielsweise neben Roheisen oder Stahl die Schlacke erzeugt, durch eine Mühle geführt wird und dabei eine ausreichende Carbonatisierung, beispielsweise von 80 % der theoretischen maximalen Carbonatisierung, erzielt. In Zukunft, wenn durch die Umstellung der Hüttenprozesse diese kohlendioxidhaltigen Gasströme nicht mehr in diesem Umfang zur Verfügung stehen, reicht die Kontaktzeit während der Mahlung allein nicht mehr für eine ausreichende Carbonatisierung aus. Daher kann dann ein Carbonatisierungsreaktor nachgerüstet werden, der eine längere Verweilzeit ermöglicht und so auch bei sehr geringer Kohlendioxidkonzentration eine ausreichende Carbonatisierung ermöglicht. Diese Kombination ermöglicht eine schnelle und einfache Reduktion von Kohlendioxidemissionen (quick win) und bietet langfristig und damit nachhaltig die Möglichkeit der Entfernung von Treibhausgas aus der Atmosphäre.

In einer weiteren Ausführungsform der Erfindung wird durch die Restkühlung mit Wasser ein Feuchtegehalt von 5 bis 50 Gew.-% in der Schlacke eingestellt. Somit wird bereits an dieser Stelle eine optimale Feuchte für die Carbonatisierung eingestellt, ohne dass ein weiterer Schritt notwendig wäre. Dieses zeigt den Vorteil der Verwendung von Schlacke gegenüber anderen Kohlendioxid-Senken, wie zum Beispiel Altbeton oder aufgemahlenen Naturgesteinen. Die Schlacke entsteht während des allgemeinen, metallurgischen Herstellungsprozesses praktisch in einer besonders geeigneten Form für die Carbonatisierung.

In einer weiteren Ausführungsform der Erfindung wird im Schritt e) ein Kohlendioxid-haltiger Gasstrom aus dem schlackeerzeugenden Prozess verwendet. Wie bereits ausgeführt, entsteht Schlacke vor allem in der Eisen- und Stahlindustrie, die heute mit Kohle/Koks zu einem großen Anteil auf fossile Energieträger und Reduktionsmittel setzt und damit (vor der grünen Transformationen) große Kohlendioxid-haltige Gasströme bereitstellt und somit automatisch direkt an dem Ort, an dem eben auch die Schlacke selber entsteht.

In einer weiteren alternativen Ausführungsform der Erfindung wird im Schritt e) Luft als kohlendioxidhaltiger Gasstrom verwendet. Dieses ist insbesondere für die Zeit beziehungsweise schlackeerzeugenden Vorrichtungen bevorzugt, die bereits auf Kohlendioxid-freie Produktion umgestellt worden sind. Insbesondere erfolgt die Carbonatisierung zunächst mit Luft als Kohlendioxid-armen Gas und anschließend mit einem Kohlendioxid-reichen Gas aus der Eisen- und/oder Stahlherstellung. Auch weitere industrielle CO₂-Quellen (Zementherstellung, Müllverbrennung und andere) sind denkbar.

In einer weiteren Ausführungsform der Erfindung erfolgt im Schritt e) eine Wasserzufuhr. Da zur Carbonatisierung ein kohlendioxidhaltiger Gasstrom mit der Schlacke innig in Kontakt gebracht wird, kommt es zu einer Austrocknung der Schlacke. Insbesondere eine Austrocknung unter wenigstens 5 Gew.-% Feuchte sollte vermieden werden, weshalb eine Wasserzufuhr zum Ausgleich der Austrocknung vorteilhaft sein kann.

In einer weiteren Ausführungsform der Erfindung wird Schlacke aus dem Linz-Donawitz-Verfahren dem Schritt a) zugeführt.

Vorteilhaft ist, wenn der Gasstrom nur teilweise von Kohlendioxid abgereichert wird und keine (nahezu) vollständige Abreicherung angestrebt wird. Werden aus einem Abgasstrom beispielswiese nur 25 bis 50 % des Kohlendioxids entfernt, so kann auch dieses bereits ein schnell zu realisierender Beitrag zum Klimaschutz sein.

## Patentansprüche

1. Verfahren zur Erzeugung von Eisen und/oder Stahl, wobei bei der Erzeugung von Eisen und/oder Stahl eine Schlacke als Nebenprodukt entsteht, wobei bei der Erzeugung von Eisen und/oder Stahl Kohlendioxid als Nebenprodukt anfällt, wobei das Verfahren zur Bindung des Kohlendioxids aus der Erzeugung von Eisen und/oder Stahl an die Schlacke aus der Erzeugung von Eisen und/oder Stahl dient, wobei das Verfahren die folgenden Schritte aufweist:
a) Verbringen der schmelzflüssigen Schlacke in ein Schlackenbeet,
b) Abkühlen einschließlich Erstarren der Schlacke im Schlackenbeet,
c) Restkühlung der Schlacke mit Wasser und Brechen der Schlacke aus dem Schlackenbeet,
d) Zerkleinerung der in Schritt c) erhaltenen feuchten Schlacke,
e) Carbonatisieren der Schlacke während und/oder nach Schritt d) mit der in Schritt c) erhaltenen Feuchte mit dem Kohlendioxid aus der Erzeugung von Eisen und/oder Stahl.

2. Verfahren nach Anspruch 1, **dadurch gekennzeichnet, dass** das Zerkleinern in Schritt c) mit einer Vertikalmühle oder einer Kugelmühle erfolgt.

3. Verfahren nach einem der vorstehenden Ansprüche, **dadurch gekennzeichnet, dass** Schritt d) und e) wenigstens teilweise gleichzeitig durchgeführt werden, wobei durch die Vorrichtung zur Zerkleinerung Kohlendioxid-haltiges Gas geleitet wird.

4. Verfahren nach einem der vorstehenden Ansprüche, **dadurch gekennzeichnet, dass** die Carbonatisierung in Schritt e) wenigstens teilweise in einem Carbonatisierungsreaktor anschließend an Schritt d) durchgeführt wird.

5. Verfahren nach einem der vorstehenden Ansprüche, **dadurch gekennzeichnet, dass** durch die Restkühlung mit Wasser ein Feuchtegehalt von 5 bis 50 Gew.-% in der feuchten Schlacke eingestellt wird.

6. Verfahren nach einem der vorstehenden Ansprüche, **dadurch gekennzeichnet, dass** im Schritt e) ein Kohlendioxid-haltiger Gasstrom aus dem schlackeerzeugenden Prozess verwendet wird.

7. Verfahren nach einem der Ansprüche 1 bis 5, **dadurch gekennzeichnet, dass** im Schritt e) Luft als Kohlendioxid-halter Gasstrom verwendet wird.

8. Verfahren nach einem der vorstehenden Ansprüche, **dadurch gekennzeichnet, dass** im Schritt e) eine Wasserzufuhr erfolgt.

9. Verfahren nach einem der vorstehenden Ansprüche, **dadurch gekennzeichnet, dass** Schlacke aus dem Linz-Donawitz-Verfahren dem Schritt a) zugeführt wird.
